# EUROPEAN PATENT APPLICATION

(11) **EP 4 742 767 A1**
(43) Date of publication of application: **13.05.2026**
(21) Application number: 23944027.4
(22) Date of filing: 05.07.2023
(51) Int. Cl.: H04W 52/02

(54) **COMMUNICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2023/105908
(87) International publication number: WO 2025/007296

(57) **Abstract**

Embodiments of the present disclosure relate to the technical field of communications, and provided thereby are a communication method and apparatus, a device, and a storage medium. The method comprises: determining a first message frame, the first message frame being used for indicating a sleep period of at least one affiliated AP of a first access point multi-link device (AP MLD); and sending the first message frame. The embodiments of the disclosure can provide a method for indicating a sleep period of an AP device.

## Description

### TECHNICAL FIELD

The disclosure relates to a field of communication technologies, and particularly to a communication method, a communication device, a device, and a storage medium.

### BACKGROUND

In ultra high reliability (UHR) technologies, techniques for reducing the amount used by a device is a key research issue. Currently, a station (STA) device may achieve power saving by a mechanism such as opportunistic power save (OPS) or target wake time (TWT). In most cases, an access point (AP) device may also enter a dormant state for power saving. However, how the AP device indicate a dormant period still needs to be studied.

### SUMMARY

Embodiments of the disclosure provide a communication method, a communication device, a device, and a storage medium, which may provide a method for sending a dormant period of an access point (AP) device.

According to a first aspect, embodiments of the disclosure provide a communication method, including:
determining a first message frame, in which the first message frame indicates a dormant period of at least one affiliated AP of a first AP multi-link device (MLD) supporting multiple links; and
sending the first message frame.

According to a second aspect, embodiments of the disclosure provide a communication method, performed by a first station (STA) device, including:
receiving a first message frame, in which the first message frame indicates a dormant period of at least one affiliated AP of a first AP MLD.

According to a third aspect, embodiments of the disclosure provide a communication device, including:
a first processing module, configured to determine a first message frame, in which the first message frame indicates a dormant period of at least one affiliated AP of a first AP MLD supporting multiple links; and
a first transceiver module, configured to send the first message frame.

According to a fourth aspect, embodiments of the disclosure provide a communication device, including:
a second transceiver module, configured to receive a first message frame, in which the first message frame indicates a dormant period of at least one affiliated AP of a first AP MLD.

According to a fifth aspect, embodiments of the disclosure provide an AP device, including one or more processors.

The AP device is configured to perform the communication method provided in the first aspect of embodiments of the disclosure.

According to a sixth aspect, embodiments of the disclosure provide an STA device, including one or more processors.

The STA device is configured to perform the communication method provided in the second aspect of embodiments of the disclosure.

According to a seventh aspect, embodiments of the disclosure provide a storage medium for storing instructions. When the instructions are run on a communication device, the communication device is caused to perform the communication method provided in the first aspect or the second aspect of the embodiments of the disclosure.

According to an eighth aspect, embodiments of the disclosure provide a communication system including an AP device and an STA device, in which the AP device is configured to perform the communication method as described in the first aspect, and the STA device is configured to perform the method as described in the second aspect.

Based on the communication method, the communication device, the device, and the storage medium provided by embodiments of the disclosure, the dormant period of the AP device may be indicated.

Additional aspects and advantages of embodiments of disclosure will be given in part in the following descriptions, become apparent in part from the following descriptions, or be learned from the practice of the disclosure.

### BRIEF DESCRIPTION OF THE DRAWINGS

In order to clearly illustrate a technical solution of embodiments of the disclosure, a brief description is made below to accompanying drawings used in description of embodiments of the disclosure. Obviously, the accompanying drawings in the following descriptions are only some embodiments of the disclosure, and for those skilled in the art, other accompanying drawings may be obtained based on these accompanying drawings without creative labor.
FIG. 1 is a schematic diagram illustrating an architecture of a communication system according to an embodiment of the disclosure.
FIG. 2 is a first schematic diagram illustrating an interaction of a communication method according to an embodiment of the disclosure.
FIG. 3 is a second schematic diagram illustrating an interaction of a communication method according to an embodiment of the disclosure.
FIG. 4 is a first flow chart illustrating a communication method performed by a first access point (AP) device according to an embodiment of the disclosure.
FIG. 5 is a second flow chart illustrating a communication method performed by a first AP device according to an embodiment of the disclosure.
FIG. 6 is a first flow chart illustrating a communication method performed by a first station (STA) device according to an embodiment of the disclosure.
FIG. 7 is a second flow chart illustrating a communication method performed by a first STA device according to an embodiment of the disclosure.
FIGS. 8a to 8b are block diagrams illustrating a communication device according to embodiments of the disclosure.
FIG. 9a is a block diagram illustrating an AP device according to an embodiment of the disclosure.
FIG. 9b is a block diagram illustrating an STA device according to an embodiment of the disclosure.
FIG. 10 is a block diagram illustrating a communication device according to an embodiment of the disclosure.

### DETAILED DESCRIPTION

Embodiments of the disclosure provide a communication method, a communication device, a device, and a storage medium.

According to a first aspect, embodiments of the disclosure provide a communication method, including:
determining a first message frame, in which the first message frame indicates a dormant period of at least one affiliated access point (AP) of a first AP multi-link device (MLD) supporting multiple links; and
sending the first message frame.

In the above embodiment, the dormant period of the at least one affiliated AP device of the AP MLD may be directly indicated by the first message frame, which improves the indication efficiency of the dormant period and refines an indication mechanism of the dormant period.

In combination with some embodiments of the first aspect, in some embodiments, the first message frame includes at least one first information field, each of the at least one first information field corresponds to a communication link, and each per-station (STA) profile field includes a first identifier bit, in which the first identifier bit indicates, by a first value, that an affiliated AP device associated with the communication link supports entering a dormant state; and the first identifier bit indicates, by a second value, that the affiliated AP device associated with the communication link is always in an active state.

In the above embodiments, the first message frame may also indicate, by the first identifier bit, whether each affiliated AP device of the AP MLD supports entering the dormant state or is always in the active state, which reduces signaling overhead when refining an indication mechanism of the dormant period.

In combination with some embodiments of the first aspect, in some embodiments, each of the at least one first information field includes a second identifier bit, in which the second identifier bit indicates, by a third value, that the affiliated AP device associated with the communication link has a dormant period; and the second identifier bit indicates, by a fourth value, that the affiliated AP device associated with the communication link does not have the dormant period.

In the above embodiments, the first message frame may also indicate, by the second identifier bit, whether the affiliated AP device of the AP MLD has the dormant period, which is beneficial for the first AP device to determine which affiliated AP devices have dormant periods and beneficial to improving the efficiency of data transmission.

In combination with some embodiments of the first aspect, in some embodiments, each of the at least one first information field includes a STA control field, in which the STA control field includes the first identifier bit and the second identifier bit.

In combination with some embodiments of the first aspect, in some embodiments, each of the at least one first information field includes an STA information field, and, in a case that an affiliated AP device associated with a communication link corresponding to the STA information field has a dormant period, the STA information field includes the dormant period of the affiliated AP device.

In the above embodiments, each of the at least one first information field may reuse an existing information field to indicate the dormant period of the affiliated AP device, which is beneficial to saving the signaling resource.

In combination with some embodiments of the first aspect, in some embodiments, the first message frame includes a basic multi-link element field, the basic multi-link element field includes each of the at least one first information field, and the first information field is the per-STA profile field.

In combination with some embodiments of the first aspect, in some embodiments, each of the at least one first information field includes a basic service set (BSS) parameter change count field, and an identifier value of the BSS parameter change count field changes in a case that a dormant period of an affiliated AP device associated with a communication link corresponding to the BSS parameter change count field changes.

The identifier value of the BSS parameter change count field indicates a number of changes of a BSS parameter of the affiliated AP device, and the BSS parameter includes the dormant period.

In the above embodiments, the first message frame may also indicate, by the first information field, whether the dormant period of the affiliated AP device changes, which is beneficial for the first STA device to intuitively determine an affiliated AP device with the dormant period changed.

In combination with some embodiments of the first aspect, in some embodiments, each of the at least one first information field includes a non-simultaneous transmit-receive (NSTR) indication bitmap field, and indicated content of the NSTR indication bitmap field changes in a case that a dormant period of an affiliated AP associated with a communication link corresponding to the NSTR indication bitmap field changes.

In the above embodiments, the first message frame may also indicate, by the first information field, whether the indicated content of the NSTR indication bitmap field corresponding to the affiliated AP device changes, which is beneficial for the STA device to determine an NSTR link state of the affiliated AP device.

In combination with some embodiments of the first aspect, in some embodiments, the first message frame is at least one of a beacon frame, an association response frame, or a probe response frame.

In the above embodiments, the first message frame may reuse an existing message frame, which is beneficial for saving the signaling resources.

In combination with some embodiments of the first aspect, in some embodiments, in an active state, a last downlink data frame sent to an associated first STA device includes a first indication field, and the first indication field indicates, by a fifth value, entering a dormant state upon arrival of the dormant period.

After sending the last downlink data frame, the method further includes:
receiving a first acknowledgment frame sent by the first STA device and entering the dormant state upon the arrival of the dormant period, in which the first acknowledgment frame indicates acknowledgment of receiving the last downlink data frame.

In the above embodiments, in the case that, in the active state the downlink data frame is sent to the first STA device, it may be indicated by the last downlink data frame that the dormant state is entered upon the arrival of the dormant period, such that the first STA device determines that no more downlink data frames is received and determines an occasion when a sender of the downlink data frame enters the dormant state.

In combination with some embodiments of the first aspect, in some embodiments, the first indication field is a power saving information field in a medium access control (MAC) frame header.

In combination with some embodiments of the first aspect, in some embodiments, a last uplink data frame received in an active state and sent by a first STA device includes a second indication field, and the second indication field indicates, by a sixth value, that the first STA device send no more uplink data frame.

After receiving the last uplink data frame, the method further includes:
sending a second acknowledgment frame and a second message frame, in which the second message frame includes a third indication field, the third indication field indicates, by a seventh value, entering a dormant state upon arrival of the dormant period, and the second acknowledgment frame indicates acknowledgment of receiving an uplink data frame; and
receiving a third acknowledgment frame sent by a first STA, and entering the dormant state upon the arrival of the dormant period, in which the third acknowledgment frame indicates acknowledgment of receiving the second message frame.

In the above embodiments, in the case that, in the active state, the uplink data frame sent by the first STA device is received, the first STA device may indicate, by the last uplink data frame, that no more uplink data frame is sent. Further, the second message frame may indicate that the AP enters the dormant state upon the arrival of the dormant period, such that the first STA device determines an occasion when a receiver of the uplink data frame enters the dormant state.

In in combination with some embodiments of the first aspect, in some embodiments, the second indication field is a more data field in an MAC frame header, and the third indication field is a power saving information field in the MAC frame header; and the second message frame is a quality of service (QoS) null frame.

According to a second aspect, embodiments of the disclosure provide a communication method, including:
receiving a first message frame, in which the first message frame indicates a dormant period of at least one affiliated AP of a first AP MLD.

In the above embodiments, the first STA device may determine the dormant period of the at least one affiliated AP device of the AP MLD by the first message frame, which improves the indication efficiency of the dormant period and refines the indication mechanism of the dormant period.

In combination with some embodiments of the second aspect, in some embodiments, the first message frame includes at least one first information field, each of the at least one first information field corresponds to a communication link, and each per-STA profile configuration information field includes a first identifier bit, in which the first identifier bit indicates, by a first value, that an affiliated AP device associated with the communication link supports entering a dormant state; and the first identifier bit indicates, by a second value, that the affiliated AP device associated with the communication link is always in an active state.

In the above embodiments, the dormant period of the at least one affiliated AP device of the AP MLD may be directly indicated by the first message frame, which improves the indication efficiency of the dormant period and refines the indication mechanism of the dormant period.

In combination with some embodiments of the second aspect, in some embodiments, the first message frame includes at least one first information field, each of the at least one first information field corresponds to a communication link, and each per-STA profile configuration information field includes a first identifier bit, in which the first identifier bit indicates, by a first value, that an affiliated AP device associated with the communication link supports entering a dormant state; and in which the first identifier bit indicates, by a second value, that the affiliated AP device associated with the communication link is always in an active state.

In the above embodiments, the first message frame may also, by the first identifier bit, support whether each affiliated AP device of the AP MLD supports entering the dormant state or is always in the active state, such that the when an indication mechanism of the dormant period is refined signaling overhead is reduced.

In combination with some embodiments of the second aspect, in some embodiments, each of the at least one first information field includes a second identifier bit, in which the second identifier bit indicates, by a third value, that the affiliated AP device associated with the communication link has a dormant period; and the second identifier bit indicates, by a fourth value, that the affiliated AP device associated with the communication link does not have the dormant period.

In the above embodiments, the first message frame may also indicate, by the second identifier bit, whether the affiliated AP device of the AP MLD has the dormant period, which is beneficial for the first AP device to determine which affiliated AP devices have dormant periods and beneficial to improving the efficiency of data transmission.

In combination with some embodiments of the second aspect, in some embodiments, each of the at least one first information field includes an STA control field, and the STA control field includes the first identifier bit and the second identifier bit.

In combination with some embodiments of the second aspect, in some embodiments, each of the at least one first information field includes an STA information field, and in a case that an affiliated AP device associated with a communication link corresponding to the STA information field has a dormant period, the STA information field includes the dormant period of the affiliated AP device.

In the above embodiments, each of the at least one first information field may reuse an existing information field to indicate the dormant period of the affiliated AP device, which is beneficial for saving the signaling resources.

In combination with some embodiments of the second aspect, in some embodiments, the first message frame includes a basic multi-link element field, the basic multi-link element field includes each of the at least one first information field, and the first information field is the per-STA profile field.

In combination with some embodiments of the second aspect, in some embodiments, each of the at least one first information field includes a BSS parameter change count field, and an identifier value of the BSS parameter change count field changes in a case that a dormant period of an affiliated AP device associated with a communication link corresponding to the BSS parameter change count field changes.

The identifier value of the BSS parameter change count field indicates a number of changes of a BSS parameter of the affiliated AP device, and the BSS parameter includes the dormant period.

In the above embodiments, the first message frame may also indicate, by the first information field, whether the dormant period of the affiliated AP device changes, which is beneficial for the first STA device to intuitively determine an affiliated AP device with the dormant period changed.

In combination with some embodiments of the second aspect, in some embodiments, each of the at least one first information field includes an NSTR indication bitmap field, and, indicated content of the NSTR indication bitmap field changes in a case that a dormant period of an affiliated AP associated with a communication link corresponding to the NSTR indication bitmap field changes.

In the above embodiments, the first message frame may also indicate, by the first information field, whether the indicated content of the NSTR indication bitmap field corresponding to the affiliated AP device changes, which is beneficial for the STA device to determine an NSTR link state of the affiliated AP device.

In combination with some embodiments of the second aspect, in some embodiments, the first message frame is at least one of a beacon frame, an association response frame, or a probe response frame.

In the above embodiments, the first message frame may reuse the existing message frame, which is beneficial for saving the signaling resources.

In combination with some embodiments of the first aspect, in some embodiments, a last downlink data frame received when a first AP device is in an active state includes a first indication field, and the first indication field indicates, by a fifth value, that the first AP device enters a dormant state upon arrival of the dormant period.

After receiving the last downlink data frame, the method further includes:
sending a first acknowledgment frame to the first AP device, in which the first message frame indicates acknowledgment of receiving the last downlink data frame.

In combination with some embodiments of the second aspect, in some embodiments, the first indication field is a power saving information field in an MAC frame header.

In combination with some embodiments of the second aspect, in some embodiments, a last uplink data frame sent to a first AP device in an active state includes a second indication field, and the second indication field indicates, by a sixth value, that no more uplink data frame is sent.

After sending the last uplink data frame, the method further includes:
receiving a second acknowledgment frame and a second message frame sent by the first AP device, in which the second message frame includes a third indication field, the third indication field indicates, by a seventh value, that the first AP device enters a dormant state upon arrival of the dormant period, and the second acknowledgment frame indicates acknowledgment of receiving an uplink data frame; and
sending a third acknowledgment frame to the first AP device, in which the third acknowledgment frame indicates acknowledgment of receiving the second message frame.

In the above embodiments, in the case that the first AP device in the active state receives the uplink data frame, the first AP device may indicate, by the last uplink data frame, that no more uplink data frame is sent. The first AP device may then indicate, by the second message frame, that the first AP device enters the dormant state upon the arrival of the dormant period, such that a sender of the uplink data frame determines an occasion when the first AP device enters the dormant state.

In combination with some embodiments of the second aspect, in some embodiments, the second indication field is a more data field in an MAC frame header, and the third indication field is a power saving information field in the MAC frame header; and the second message frame is a QoS null frame.

According to a third aspect, embodiments of the disclosure provide a communication device, including a first processing module and a first transceiver module, in which the first processing module is configured to determine a first message frame, and the first transceiver module is configured to perform sending the first message frame in the first aspect and the alternative implementations of the first aspect.

According to a fourth aspect, embodiments of the disclosure provide a communication device, including a second transceiver module, in which the second transceiver module is configured to perform the second aspect and the alternative implementations of the second aspect.

According to a fifth aspect, embodiments of the disclosure provide an AP device, including: one or more processors, in which the AP device is configured to perform the first aspect and the alternative implementations of the first aspect.

According to a sixth aspect, embodiments of the disclosure provide an STA device, including: one or more processors, in which the STA device is configured to perform the second aspect and the alternative implementations of the second aspect.

According to a seventh aspect, embodiments of the disclosure provide a communication system, including an AP device and an STA device, in which the AP device is configured to perform the method as described in the first aspect and the method as described in the alternative implementations of the first aspect, the STA device is configured to perform the method as described in the second aspect and the method as described in the alternative implementations of the second aspect.

According to an eighth aspect, embodiments of the disclosure provide a storage medium for storing instructions. When the instructions are run on a communication device, the communication device is caused to perform the communication method as described in the first aspect and the second aspect, and the method as described in the alternative implementations of the first aspect and the second aspect.

According to a ninth aspect, embodiments of the disclosure provide a program product. When the program product is executed by a communication device, the communication device is caused to perform the method as described in the first aspect and the second aspect, and the method as described in the alternative implementations of the first aspect and the second aspect.

According to a tenth aspect, embodiments of the disclosure provide a computer program. When the computer program is executed on a computer, the computer is caused to perform the method as described in the first aspect and the second aspect, and the method as described in the alternative implementations of the first aspect and the second aspect.

According to an eleventh aspect, embodiments of the disclosure provide a chip or a chip system. The chip or chip system includes a processing circuit, configured to perform the method as described in the first aspect and the second aspect, and the method as described in the alternative implementations of the first aspect and the second aspect.

It may be understood that all the communication device, the AP device, the STA device, the communication system, the storage medium, the program product, the computer program, the chip or the chip system are used to perform the method provided by the embodiments of the disclosure. Therefore, achieved beneficial effects may be referred to the beneficial effects in the corresponding method, which is not repeated here.

Embodiments of the disclosure provide a communication method, a communication device, a device, and a storage medium. In some embodiments, terms such as communication method, information processing method, method for communication, etc. may be used interchangeably, terms such as communication device, information processing apparatus, etc. may be used interchangeably, and terms such as information processing system, communication system, etc. may be used interchangeably.

The embodiments of the disclosure are not exhaustive and only serve as illustrations of some embodiments, but not as detailed limitations to the protection scope of the disclosure. Without conflict, each step in a certain embodiment may be implemented as an independent embodiment, and steps may be arbitrarily combined. For example, a solution obtained by removing some steps from a certain embodiment may also be implemented as an independent embodiment. Moreover, an order of steps in a certain embodiment may be arbitrarily exchanged. In addition, alternative implementations in a certain embodiment may be arbitrarily combined. Furthermore, different embodiments may be arbitrarily combined. For example, some or all steps of different embodiments may be arbitrarily combined, and a certain embodiment may be arbitrarily combined with alternative implementations of other embodiments.

In respective embodiments of the disclosure, unless otherwise specified and logical inconsistency, terms and/or descriptions are consistent in respective embodiments and reference may be made to each other. Technical features from different embodiments may be combined to form a new embodiment based on their inherent logical relationships.

The terms used in the embodiments of the disclosure are for a purpose of describing specific embodiments only, and are not intended to limit the disclosure.

In the embodiments of the disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the disclosure, "a plurality of/multiple" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the disclosure, depending on situations, may include at least one of following solutions: performing A in some embodiments (performing A independently of B); performing B in some embodiments (performing B independently of A); selecting one of A or B for execution in some embodiments (selectively performing A or B); and performing A and B in some embodiments (performing A and B). The similar principle applies when there are more parts such as A, B, C, etc.

In some embodiments, expressions such as "A or B", depending on situations, may include following technical solutions: performing A in some embodiments (performing A independently of B); performing B in some embodiments (performing B independently of A); and selecting one of A or B for execution in some embodiments (selectively performing A or B). The similar principle applies when there are more parts such as A, B, C, etc.

The prefix word such as "first", "second" or the like in the embodiments of the disclosure are used merely to distinguish different described objects and do not limit a position, an order, a priority, a quantity, or content of the described objects. For a statement regarding the described object, reference may be made to claims or descriptions in the context of embodiments and should not constitute other restrictions due to the use of the prefix word. For example, if the described object is "field", ordinal numbers before the "field" in "first field" and "second field" do not limit a position or an order between fields. "First" and "second" do not limit whether modified "fields" are in a same message, nor an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be a same apparatus or different apparatuses, and types of the "first apparatus" and "second apparatus" may be the same or different. For another example, if the described object is "information", "first information" and "second information" may be same information or different information, and content of the "first information" and "second information" may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, obtaining data, information, etc. shall comply with laws and regulations of a located country.

In some embodiments, data, information, etc. may be obtained after agreed by a user.

In addition, each element, each row, or each column in tables of the embodiments of the disclosure may be implemented as an independent embodiment. Any combination of elements, rows, or columns may also be implemented as an independent embodiment.

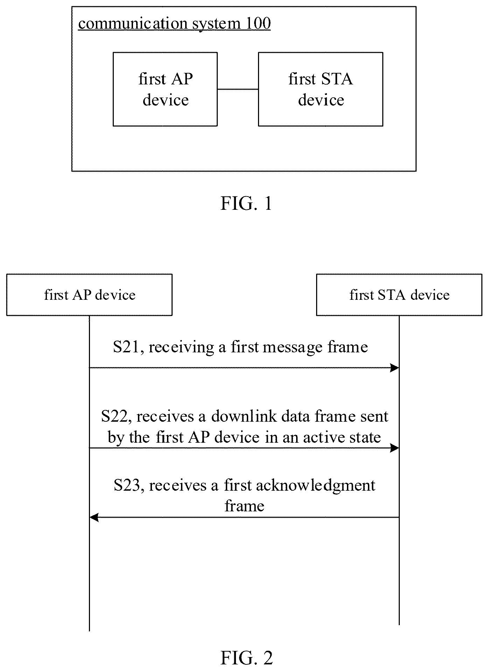

FIG. 1 is a schematic diagram illustrating an architecture of a communication system according to an embodiment of the disclosure.

As illustrated in FIG. 1, a communication system 100 includes a first AP device and a first STA device.

In some embodiments, the first STA device may be an affiliated STA device of a non-AP multi-link device (non-AP MLD), which is not limited herein.

In some embodiments, the first AP device may be an affiliated AP device subordinate to an AP multi-link device (AP MLD), which is not limited herein.

Alternatively, the first AP device may be a main AP device of the AP MLD.

A multi-link device (non-AP MLD or AP MLD) includes one or more affiliated devices, and affiliated devices may operate on a same link.

A multi-link communication may be established between the non-AP MLD and the AP MLD, an affiliated STA device of the non-AP MLD communicates with an affiliated AP device of the AP MLD by one communication link.

The first STA device may be a wireless communication chip, a wireless sensor, or a wireless communication terminal, such as, a mobile phone supporting a wireless fidelity (WiFi) communication function, a tablet supporting a WiFi communication function, a set-top box supporting a WiFi communication function, a smart TV supporting a WiFi communication function, a smart wearable device supporting a WiFi communication function, a vehicle-mounted communication device supporting a WiFi communication function, and a computer supporting a WiFi communication function.

The first AP device is also called a wireless access point or a hotspot, etc. An AP device is an access point for a mobile user to enter a wired network, mainly deployed inside homes, buildings, and campuses, with a typical coverage radius of tens of meters to hundreds of meters. Of course, the AP device may also be deployed outdoors. The AP device is equivalent to a bridge connecting a wired network and a wireless network, and a main function of the AP is to connect various wireless network clients together and then connect the wireless network to the Ethernet. In detail, the AP device may be a terminal or a network device with a WiFi chip, or may be a communication device with a WiFi chip such as a base station, a router, a gateway, a repeater, a communication server, a switch, or a network bridge. The base station here may include various forms of macro base stations, micro base stations, relay stations, etc.

In some embodiments, the communication system illustrated in FIG. 1 may be applied to a wireless local area network (WLAN). Currently, a standard employed by the WLAN is Institute of Electrical and Electronics Engineers (IEEE) 802.11. The WLAN may include multiple basic service sets (BSSs). Each BSS may include one AP device (or AP MLD) and multiple STA devices (or non-AP MLD) associated with the AP device.

It may be understood that the communication system in embodiments of the disclosure is intended to illustrate the technical solution in embodiments of the disclosure more clearly, and does not constitute a limitation of the technical solution in embodiments of the disclosure. Those skilled in the art may know that the technical solution in embodiments of the disclosure is equally applicable to similar technical problems, with the evolution of a system architecture and the emergence of a new service scene.

The following embodiments of the disclosure may be applied to the communication system 100 illustrated in FIG. 1, or to some entities, which are not limited thereto. Entities in FIG. 1 are illustrative. The communication system may include all or some of the entities in FIG. 1, or may include other entities not illustrated in FIG. 1. The entities may be in any number and in any form. The entities may be physical or virtual. Connection relationships between the entities are illustrative. The entities may be unconnected or may be connected. The entities may be connected in any manner, for example, the entities may be directly connected or indirectly connected, or may be connected by a wired or wireless way.

In embodiments of the disclosure, the STA device may achieve device power saving by a mechanism such as opportunistic power save (OPS), a target wake time (TWT), an enhanced multi-link single radio (EMLSR), a listen interval, etc. For power saving of the AP device, currently, corresponding researches have been employed to implement device power saving for the AP device based on the TWT mechanism. However, the AP device and the affiliated AP device of the AP MLD also achieve power saving by entering a dormant state, and how to indicate the dormant period of the AP device still needs to be studied.

Thus, to refine the above indication mechanism of the dormant period, technical solutions in embodiments of the disclosure will be clearly and completely described below with reference to the accompanying drawings in embodiments of the disclosure. Obviously, embodiments described here are only some of embodiments of the disclosure and are not all embodiments of the disclosure. Based on embodiments of the disclosure, other embodiments obtained by those skilled in the art without creative labor are within the protection scope of the disclosure.

FIG. 2 is a first flow chart illustrating an interaction of a communication method according to an embodiment of the disclosure. As illustrated in FIG. 2, embodiments of the disclosure relate to a communication method, including the following.

At step S21, a first STA device receives a first message frame sent by a first AP device.

In some embodiments, the first AP device may be an affiliated AP device of an AP MLD.

Alternatively, the first AP device may be a main AP of the AP MLD.

In some embodiments, the first STA device may be an affiliated STA device of a non-AP MLD.

In some embodiments, the first message frame is a message frame sent by the first AP device during establishing an initial association between the first AP device and the first STA device.

Alternatively, the first message frame is at least one of a beacon frame, a probe response frame, or an association response frame.

In some embodiments, the first message frame indicates a dormant period of at least one affiliated AP of a first AP MLD.

The first AP device is affiliated with the first AP MLD. That is, the first message frame indicates the dormant period of the at least one affiliated AP device of the AP MLD with which the first AP device is affiliated.

In some embodiments, any two affiliated AP devices of the first AP MLD may have the same or different dormant periods.

In some embodiments, the first message frame includes at least one first information field, and each of the at least one first information field indicates a dormant period of one affiliated AP device of the first AP MLD.

In some embodiments, in a case that the first message frame indicates a dormant period of at least one second AP device of the first AP device, the first message frame includes at least one first information field, and each of the at least one first information field indicates a dormant period of one affiliated AP device of the first AP MLD.

Alternatively, the first message frame includes a basic multi-link element field, and the basic multi-link element field includes each of the at least one first information field.

Alternatively, the first information field may be a per-STA profile field.

In some embodiments, each first information field includes a first identifier bit, in which the first identifier bit indicates, by a first value, that an affiliated AP device associated with a corresponding communication link supports entering a dormant state; and the first identifier bit indicates, by a second value, that the affiliated AP device associated with the corresponding communication link is always in an active state.

The first value is different from the second value. For example, the first value may be 0 and the second value may be 1, which is not limited herein.

In a case that the identifier value of the first identifier bit in each first information field is the first value, the first identifier bit indicates that an affiliated AP device corresponding to the first information field where the first identifier bit is located supports entering the dormant state. In a case that the identifier value of the first identifier bit is the second value, the first identifier bit indicates that the affiliated AP device corresponding to the first information field where the first identifier is located is always in the active state.

For any affiliated AP device, in a case that the affiliated AP device supports entering the dormant state, it means that the affiliated AP device may switch between the dormant state and the active state.

For any affiliated AP device, the affiliated AP device may be in the active state to perform data frame transmission with an associated STA device, for example, receiving an uplink data frame sent by the associated STA device, or sending a downlink data frame to the associated STA device, etc.

Alternatively, the first identifier bit may be at least one reserved bit in the first information field.

Alternatively, each first information field includes an STA control field, and the STA control field includes the first identifier bit. The first identifier bit may be one bit in reserved bits of the STA control field.

In some embodiments, each first information field also includes a second identifier bit, in which the second identifier bit indicates, by a third value, that the first information field includes a dormant period of the affiliated AP device associated with the corresponding communication link, that is, indicates that the affiliated AP device associated with the corresponding communication link has a dormant period; and the second identifier bit indicates, by a fourth value or a null value, that the first information field does not include the dormant period of the affiliated AP device associated with the corresponding communication link, that is, indicates that the affiliated AP device associated with the corresponding communication link does not have the dormant period.

The third value is different from the fourth value. For example, the third value may be 1 and the fourth value may be 0, which is not limited herein.

The second identifier bit may be at least one reserved bit in the first information field.

Alternatively, each first information field includes an STA control field, and the STA control field includes the second identifier bit. The second identifier bit may be one bit in reserved bits of the STA control field.

In some embodiments, in a case that the affiliated AP device associated with the communication link corresponding to each first information field has the dormant period, the first information field includes the dormant period of the affiliated AP device.

Each first information field includes an STA information (STA Info) field. In a case that an affiliated AP device associated with a communication link corresponding to the STA information field has a dormant period, the STA information field includes the dormant period of the affiliated AP device.

The STA information field may indirectly indicate the dormant period of the affiliated AP device by carrying the dormant period of the affiliated AP device by a sub-information element field or at least one reserved bit, or carrying related indication information by a sub-information field or at least one reserved bit.

In some embodiments, each first information field corresponds to a communication link, each first information field includes a link identifier (ID) sub-field, and the link ID sub-field indicates a link ID of the communication link associated with the affiliated AP device.

Based on this, each first information field may correspond to one communication link, and each communication link is associated with one affiliated AP device of the first AP MLD, thus each first information field corresponds to or is associated with the one affiliated AP device of the first AP MLD.

Meanwhile, one affiliated AP device of the first AP MLD is associated with one affiliated STA device of the non-AP MLD by one communication link, thus each first information field corresponds to or is associated with one affiliated STA device of the non-AP MLD.

Alternatively, each first information field includes an STA control field, and the STA control field includes a link ID sub-field.

In some embodiments, each first information field includes a BSS parameter change count field, and an identifier value of the BSS parameter change count field changes in a case that a dormant period of an affiliated AP device associated with a communication link corresponding to the BSS parameter change count field changes.

The identifier value of the BSS parameter change count field indicates a number of changes of a BSS parameter of the affiliated AP device.

The BSS parameter of each affiliated AP device include the dormant period of the affiliated AP device.

Alternatively, the first information field includes a BSS parameter change count present field. In a case that an identifier value of the BSS parameter change count present field is an eighth value, it indicates that the first information field includes the BSS parameter change count field. When the identifier value of the BSS parameter change count present field is a ninth value, it indicates that the first information field does not include the BSS parameter change count field.

The eighth value is different from the ninth value. For example, the eighth value may be 1, and the ninth value may be 0, which is not limited herein.

Alternatively, the first information field includes a BSS parameter change count field, and the BSS parameter change count field indicates that a BSS parameter of the affiliated AP device changes. Then the first information field includes the second identifier bit, and the identifier value of the second identifier bit is the third value, indicating that the affiliated AP device has the dormant period, and also indicating that the first information field includes the dormant period of the affiliated AP device.

Alternatively, the first information field includes an STA control field, and the STA control field includes a BSS parameter change count present field.

Alternatively, the first information field includes an STA information field, and the STA information field includes a BSS parameter change count field.

For the first STA device, after the first STA device receives the first message frame, if the BSS parameter change count present field indicates that the first information field includes the BSS parameter change count field, it is determined whether an identifier value of the BSS parameter change count field is the same as an identifier value of the BSS parameter change count field in other message frames previously received in a corresponding affiliated AP device. In a case that the identifier value of the BSS parameter change count field is different from the identifier value of the BSS parameter change count field in other message frames previously received, it is determined that a dormant period of the affiliated AP device corresponding to a current first information field changes, and the first message frame includes the dormant period of the affiliated AP device.

In some embodiments, each first information field includes a non-simultaneous transmit-receive (NSTR) indication bitmap field, and the NSTR indication bitmap field indicates an NSTR state of the affiliated AP device.

Indicated content of the NSTR indication bitmap field changes in a case that a dormant period of an affiliated AP associated with a communication link corresponding to the NSTR indication bitmap field changes.

As an example, the first message frame includes a basic multi-link element field, and the basic multi-link element includes at least one per-STA profile field.

Each of the at least one per-STA profile fields includes the STA Control field and the STA Infor field, with a detailed format as follows.

| | Subelement ID | Length | STA Control | STA Info | STA Profile |
|---|---|---|---|---|---|
| Octets | 1 | 1 | 2 | variable | variable |

The STA control field includes the first identifier bit and the second identifier bit. When the identifier value of the first identifier bit is the first value, it indicates that the affiliated AP device supports entering the dormant state. When the identifier value of the first identifier bit is the second value, it indicates that the affiliated AP device is always in an active state.

The second identifier bit indicates, by the third value, that the first information field includes the dormant period of the affiliated AP device, that is, indicates that the affiliated AP device has the dormant period; and the second identifier bit indicates, by the fourth value or the null value, that the first information field does not include the dormant period of the affiliated AP device, that is, indicates that the affiliated AP device does not have the dormant period.

A detailed format of the STA Control field may be as follows.

| | Link ID | Complete Profile | STA MAC Address Present | Beacon interval Present | TSF Offset Present | DTIM Info Present | Link Pair Present | NSTR Bitmap Size | BSS Parameter Change Count Present | first identifier bit | second identifier bit |
|---|---|---|---|---|---|---|---|---|---|---|---|
| Octets | 4 | 1 | 2 | 1 | 1 | 1 | | 1 | 1 | | |

The STA control field includes a link ID field, and the link ID field indicates a link identifier of a communication link associated with the affiliated AP device.

Each of the first identifier bit and the second identifier bit may be at least one bit, which is not limited herein.

Based on this, each per-STA profile field may correspond to one communication link, and each communication link is associated with one affiliated AP device of the first AP MLD, and thus each per-STA profile field corresponds to or is associated with one affiliated device of the first AP MLD.

Meanwhile, one affiliated AP device of the first AP MLD is associated with one affiliated STA device of a non-AP MLD by one communication link, thus each per-STA profile field corresponds to or is associated with the one affiliated STA device of the non-AP MLD.

The per-STA profile field includes the BSS parameter change count present field. When the identifier value of the BSS parameter change count present field is an eighth value, it indicates that the per-STA profile field includes the BSS parameter change count field. When the identifier value of the BSS parameter change count present field is a ninth value, it indicates that the first information field does not include the BSS parameter change count field.

In detail, a format of the STA Info field is as follows.

| | STA Info Length | STA MAC Address | Beacon interval | TSF Offset | DTIM Info | NSTR Indication Bitmap | BSS Parameter Change Count | dormant period |
|---|---|---|---|---|---|---|---|---|
| Octets | 1 | 0 or 8 | 0 or 2 | 0 or 8 | 0 or 2 | 0 or lor 2 | 0 or 1 | |

The per-STA profile field includes an NSTR indication bitmap field, and the NSTR indication bitmap field indicates an NSTR state of the affiliated AP device.

Indicated content of the NSTR indication bitmap field changes in a case that a dormant period of the affiliated AP device corresponding to the NSTR indication bitmap field changes.

The STA Info field may include the dormant period of the affiliated AP device in a sub-element field following the BSS parameter change count field.

At step S22, the first STA device receives a downlink data frame sent by the first AP device in an active state.

In some embodiments, the first AP device in the active state may send a buffered downlink data frame to the first STA device.

In some embodiments, a last downlink data frame received by the first STA device and sent by the first AP device in an active state includes a first indication field, and the first indication field indicates, by a fifth value, that the first AP device enters a dormant state upon arrival of the dormant period, and may also indicate that the first AP device switches to the dormant state after sending the downlink data frame and upon the arrival of the dormant period.

In some embodiments, the first indication field is a power saving field in an MAC frame header.

The fifth value may be 1, or another value, which is not limited herein.

At step S23, the first AP device receives a first acknowledgment frame sent by the first STA device.

In some embodiments, after the first AP device in an active state sends all downlink data frames, the first AP device may receive the first acknowledgment frame sent by the first STA device. The first acknowledgment frame indicates acknowledgment of receiving the downlink data frame sent by the first AP device.

In some embodiments, after receiving the first acknowledgment frame, the first AP device enters the dormant state upon arrival of the dormant period.

In some embodiments, steps S22 to S23 are alternative. In different embodiments, one or more of these steps may be omitted or substituted.

In some embodiments, in a case that the first AP device in the active state is not capable of sending all the downlink data frames, for the AP MLD, other affiliated AP devices in the active state may send remaining downlink data frames that are not sent by the first AP device.

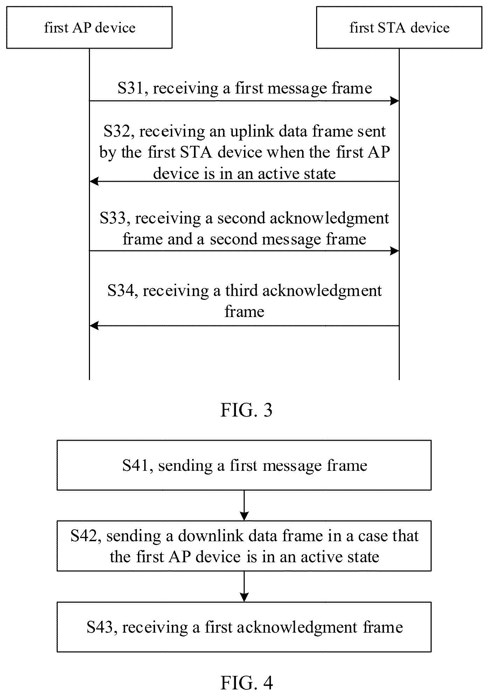

FIG. 3 is a second flow chart illustrating an interaction of a communication method according to an embodiment of the disclosure. As illustrated in FIG. 3, embodiments of the disclosure relate to a communication method, including THE following.

At step S31, a first STA device receives a first message frame sent by a first AP device.

In some embodiments, alternative implementations of step S31 may be referred to the alternative implementations of step S21 in FIG. 2, which is not repeated here.

At step S32, the first AP device receives an uplink data frame sent by the first STA device when the first AP device is in an active state.

In some embodiments, the first AP device in the active state may receive the uplink data frame sent by the first STA device when the first AP device is in the active state.

In some embodiments, a last data frame sent by the first STA device to the first AP device when the first AP device is in the active state includes a second indication field. The second indication field indicates, by a sixth value, that the first STA device no longer sends an uplink data frame.

The sixth value may be 0, or another value, which is not limited herein.

In some embodiments, the second indication field is a more data field in an MAC header.

At step S33, the first STA device receives a second acknowledgment frame and a second message frame.

In some embodiments, after the first STA device sends the uplink data frame when the first AP device is in the active state, the first STA device may receive the second acknowledgment frame sent by the first AP device. The second acknowledgment frame indicates that the first AP device acknowledges receiving the uplink data frame sent by the first STA device.

In some embodiments, after the second acknowledgment frame sent by the first AP device is received, the first STA device may also receive the second message frame sent by the first AP device. The second message frame includes a third indication field, and the third indication field indicates, by a seventh value, that the first AP device enters a dormant state upon arrival of the dormant period.

In some embodiments, the third indication field is a power save field in an MAC header.

The seventh value may be 1, or another value, which is not limited herein.

In some embodiments, the second message frame may be a QoS null frame.

At step S34, the first AP device receives a third acknowledgment frame sent by the first STA device.

In some embodiments, the first AP device may receive the third acknowledgment frame sent by the first STA device after sending the second message frame to the first STA device. The third acknowledgment frame indicates that the first STA device acknowledges receiving the second message frame.

In some embodiments, the first AP device enters the dormant state upon the arrival of the dormant period after receiving the third acknowledgment frame.

In some embodiments, steps S32 to S34 are alternative. In different embodiments, one or more of these steps may be omitted or substituted.

For FIG. 2 and FIG. 3, in some embodiments, terms such as "acquire", "obtain", "get", "receive", "transmit", "bidirectional transmit", "send and/or receive" may be used interchangeably, and may be interpreted as receiving from another entity, obtaining from a protocol, obtaining from a higher layer, obtaining by processing by itself, autonomously implementing, and other meanings.

In some embodiments, terms such as "send", "transmit", "report", "deliver", "bidirectional transmit", "send and/or receive" may be used interchangeably.

In some embodiments, reference may be made to other optional alternative methods recorded before or after the specification corresponding to FIG. 2 and FIG. 3.

In some embodiments, in a case that the first AP device in the active state may not receive all the uplink data frames of the first STA device, for the AP MLD, other affiliated AP devices in the active state may receive remaining downlink data frames from the first STA device.

Referring to FIG. 4, FIG. 4 is a first flow chart illustrating a communication method performed by a first AP device according to an embodiment of the disclosure. The communication method illustrated in FIG. 4 may be performed by a first AP device, including the following.

At step S41, a first message frame is sent.

In some embodiments, the first AP device may be an affiliated AP device of an AP MLD.

Alternatively, the first AP device may be a main AP of the AP MLD.

In some embodiments, the first AP device may send the first message frame to a first STA device, and the first STA device may be an affiliated STA device of a non-AP MLD.

In some embodiments, the first message frame is a message frame sent by the first AP device during establishing an initial association between the first AP device and the first STA device.

Alternatively, the first message frame is at least one of a beacon frame, a probe response frame, or an association response frame.

In some embodiments, the first message frame indicates a dormant period of at least one affiliated AP of a first AP MLD.

The first AP device is affiliated with the first AP MLD. That is, the first message frame indicates the dormant period of the at least one affiliated AP device of the AP MLD with which the first AP device is affiliated.

In some embodiments, any two affiliated AP devices of the first AP MLD may have the same or different dormant periods.

In some embodiments, the first message frame includes at least one first information field, and each of the at least one first information field indicates a dormant period of one affiliated AP device of the first AP MLD.

In some embodiments, in a case that the first message frame indicates a dormant period of at least one second AP device of the first AP device, the first message frame includes at least one first information field, and each of the at least one first information field indicates a dormant period of one affiliated AP device of the first AP MLD.

Alternatively, the first message frame includes a basic multi-link element field, and the basic multi-link element field includes each of the at least one first information field.

Alternatively, the first information field may be a per-STA profile field.

In some embodiments, each first information field includes a first identifier bit, in which the first identifier bit indicates, by a first value, that an affiliated AP device associated with a corresponding communication link supports entering a dormant state; and the first identifier bit indicates, by a second value, that the affiliated AP device associated with the corresponding communication link is always in an active state.

The first value is different from the second value. For example, the first value may be 0 and the second value may be 1, which is not limited herein.

In a case that the identifier value of the first identifier bit in each first information field is the first value, the first identifier bit indicates that an affiliated AP device corresponding to the first information field where the first identifier bit is located supports entering the dormant state. In a case that the identifier value of the first identifier bit is the second value, the first identifier bit indicates that the affiliated AP device corresponding to the first information field where the first identifier is located is always in the active state.

For any affiliated AP device, in a case that the affiliated AP device supports entering the dormant state, it means that the affiliated AP device may switch between the dormant state and the active state.

For any affiliated AP device, the affiliated AP device may be in the active state to perform data frame transmission with an associated STA device, for example, receiving an uplink data frame sent by the associated STA device, or sending a downlink data frame to the associated STA device, etc.

Alternatively, the first identifier bit may be at least one reserved bit in the first information field.

Alternatively, each first information field includes an STA control field, and the STA control field includes the first identifier bit. The first identifier bit may be one bit in reserved bits of the STA control field.

In some embodiments, each first information field also includes a second identifier bit, in which the second identifier bit indicates, by a third value, that the first information field includes a dormant period of the affiliated AP device associated with the corresponding communication link, that is, indicates that the affiliated AP device associated with the corresponding communication link has a dormant period; and the second identifier bit indicates, by a fourth value or a null value, that the first information field does not include the dormant period of the affiliated AP device associated with the corresponding communication link, that is, indicates that the affiliated AP device associated with the corresponding communication link does not have the dormant period.

The third value is different from the fourth value. For example, the third value may be 1 and the fourth value may be 0, which is not limited herein.

The second identifier bit may be at least one reserved bit in the first information field.

Alternatively, each first information field includes an STA control field, and the STA control field includes the second identifier bit. The second identifier bit may be one bit in reserved bits of the STA control field.

In some embodiments, in a case that the affiliated AP device associated with the communication link corresponding to each first information field has the dormant period, the first information field includes the dormant period of the affiliated AP device.

Each first information field includes an STA information (STA Info) field. In a case that an affiliated AP device associated with a communication link corresponding to the STA information field has the dormant period, the STA information field includes a dormant period of the affiliated AP device.

The STA information field may indirectly indicate the dormant period of the affiliated AP device by carrying the dormant period of the affiliated AP device by a sub-information element field or at least one reserved bit, or carrying related indication information by a sub-information field or at least one reserved bit.

In some embodiments, each first information field corresponds to a communication link, each first information field includes a link ID sub-field, and the link ID sub-field indicates a link ID of the communication link associated with the affiliated AP device.

Based on this, each first information field may correspond to one communication link, and each communication link is associated with one affiliated AP device of the first AP MLD, thus each first information field corresponds to or is associated with the one affiliated AP device of the first AP MLD.

Meanwhile, one affiliated AP device of the first AP MLD is associated with one affiliated STA device of the non-AP MLD by one communication link, thus each first information field corresponds to or is associated with one affiliated STA device of the non-AP MLD.

Alternatively, each first information field includes an STA control field, and the STA control field includes a link ID sub-field.

In some embodiments, each first information field includes a BSS parameter change count field, and an identifier value of the BSS parameter change count field changes in a case that a dormant period of an affiliated AP device associated with a communication link corresponding to the BSS parameter change count field changes.

The identifier value of the BSS parameter change count field indicates a number of changes of a BSS parameter of the affiliated AP device.

The BSS parameter of each affiliated AP device includes the dormant period of the affiliated AP device.

Alternatively, each first information field includes a BSS parameter change count present field. In a case that an identifier value of the BSS parameter change count present field is an eighth value, it indicates that the first information field includes the BSS parameter change count field. In a case that the identifier value of the BSS parameter change count present field is a ninth value, it indicates that the first information field does not include the BSS parameter change count field.

The eighth value is different from the ninth value. For example, the eighth value may be 1, and the ninth value may be 0, which is not limited herein.

Alternatively, the first information field includes a BSS parameter change count field, and the BSS parameter change count field indicates that a BSS parameter of the affiliated AP device changes. Then the first information field includes the second identifier bit, and the identifier value of the second identifier bit is the third value, indicating that the affiliated AP device has the dormant period, and also indicating that the first information field includes the dormant period of the affiliated AP device.

Alternatively, the first information field includes an STA control field, and the STA control field includes a BSS parameter change count present field.

Alternatively, the first information field includes an STA information field, and the STA information field includes a BSS parameter change count field.

In some embodiments, each first information field includes an NSTR indication bitmap field, and the NSTR indication bitmap field indicates an NSTR state of the affiliated AP device.

Indicated content of the NSTR indication bitmap field changes in a case that a dormant period of an affiliated AP associated with a communication link corresponding to the NSTR indication bitmap field changes.

At step S42, a downlink data frame is sent in a case that the first AP device is in an active state.

In some embodiments, the first AP device may send a buffered downlink data frame to the first STA device when the first AP device is in the active state.

In some embodiments, a last downlink data frame sent by a first STA device in the active state includes a first indication field, and the first indication field indicates, by a fifth value, that the first AP device enters the dormant state upon arrival of the dormant period, and may also indicate that the first AP device switches to the dormant state after sending the downlink data frame and upon the arrival of the dormant period.

In some embodiments, the first indication field is a power saving field in an MAC header.

The fifth value may be 1, or another value, which is not limited herein.

At step S43, a first acknowledgment frame is received.

In some embodiments, after the first AP device sends all downlink data frames when the first AP device is in the active state, the first AP device may receive the first acknowledgment frame sent by the first STA device. The first acknowledgment frame indicates acknowledgment of receiving the downlink data frame sent by the first AP device.

In some embodiments, after receiving the first acknowledgment frame, the first AP device enters the dormant state upon arrival of the dormant period.

In some embodiments, steps S42 to S43 are alternative. In different embodiments, one or more of these steps may be omitted or substituted.

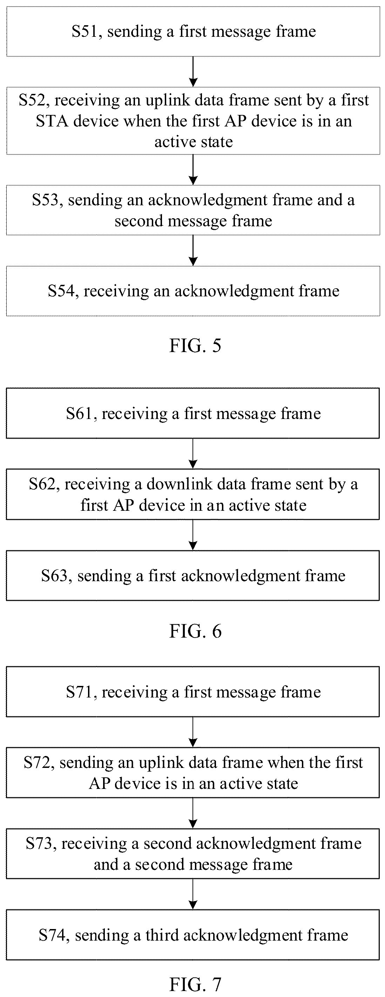

Referring to FIG. 5, FIG. 5 is a second flow chart illustrating a communication method performed by a first AP device according to an embodiment of the disclosure. The communication method illustrated in FIG. 5 may be performed by a first AP device, including the following.

At step S51, a first message frame is sent.

In some embodiments, alternative implementations of step S51 may be referred to the alternative implementations of step S41 in FIG. 4, which is not repeated here.

At step S52, an uplink data frame sent by a first STA device is received when a first AP device is in an active state.

In some embodiments, the first AP device may receive the uplink data frame sent by the first STA device when the first AP device is in the active state.

In some embodiments, a last data frame sent by the first STA device to the first AP device when the first AP device is in the active state includes a second indication field. The second indication field indicates, by a sixth value, that the first STA device no longer sends an uplink data frame.

The sixth value may be 0, or another value, which is not limited herein.

In some embodiments, the second indication field is a more data field in an MAC header.

At step S53, an acknowledgment frame and a second message frame are sent.

In some embodiments, after the first AP device in the active state completes receiving the uplink data frame sent by the first STA device, the first AP device may send a second acknowledgment frame to the first STA device. The second acknowledgment frame indicates that the first AP device acknowledges receiving the uplink data frame sent by the first STA device.

In some embodiments, after sending the second acknowledgment frame, the first AP device may send the second message frame to the first STA device. The second message frame includes a third indication field, and the third indication field indicates, by a seventh value, that the first AP device enters a dormant state upon arrival of the dormant period.

In some embodiments, the third indication field is a power saving field in an MAC header.

The seventh value may be 1, or another value, which is not limited herein.

In some embodiments, the second message frame may be a QoS null frame.

At step S54, a third acknowledgment frame is received.

In some embodiments, after the second message frame is sent to the first STA device, the first AP device may receive the third acknowledgment frame sent by the first STA device. The third acknowledgment frame indicates that the first STA device acknowledges receiving the second message frame.

In some embodiments, after the third acknowledgment frame is received, the first AP device enters the dormant state upon the arrival of the dormant period.

In some embodiments, steps S52 to S54 are alternative. In different embodiments, one or more of these steps may be omitted or substituted.

Referring to FIG. 6, FIG. 6 is a first flow chart illustrating a communication method performed by a first STA device according to an embodiment of the disclosure. The communication method illustrated in FIG. 6 may be performed by a first STA device, including the following.

At step S61, a first message frame is received.

In some embodiments, the first AP device may be an affiliated AP device of an AP MLD.

Alternatively, the first AP device may be a main AP of the AP MLD.

In some embodiments, the first STA device may be an affiliated STA device of a non-AP MLD.

In some embodiments, the first message frame is a message frame sent by the first AP device during establishing an initial association between the first AP device and the first STA device.

Alternatively, the first message frame is at least one of a beacon frame, a probe response frame, or an association response frame.

In some embodiments, the first message frame indicates a dormant period of at least one affiliated AP of a first AP MLD.

The first AP device is affiliated with the first AP MLD. That is, the first message frame indicates a dormant period of at least one affiliated AP device of the AP MLD with which the first AP device is affiliated

In some embodiments, any two affiliated AP devices of the first AP MLD may have the same or different dormant periods.

In some embodiments, the first message frame includes at least one first information field, and each of the at least one first information field indicates a dormant period of one affiliated AP device of the first AP MLD.

In some embodiments, in a case that the first message frame indicates a dormant period of at least one second AP device of the first AP device, the first message frame includes at least one first information field, and each of the at least one first information field indicates a dormant period of one affiliated AP device of the first AP MLD.

Alternatively, the first message frame includes a basic multi-link element field, and the basic multi-link element field includes each of the at least one first information field.

Alternatively, the first information field may be a per-STA profile field.

In some embodiments, each first information field includes a first identifier bit, in which the first identifier bit indicates, by a first value, that an affiliated AP device associated with a corresponding communication link supports entering a dormant state; and the first identifier bit indicates, by a second value, that the affiliated AP device associated with the corresponding communication link is always in an active state.

The first value and the second value are different. For example, the first value may be 0 and the second value may be 1, which is not limited herein.

In a case that the identifier value of the first identifier bit in each first information field is the first value, the first identifier bit indicates that an affiliated AP device corresponding to the first information field where the first identifier bit is located supports entering the dormant state. In a case that the identifier value of the first identifier bit is the second value, the first identifier bit indicates that the affiliated AP device corresponding to the first information field where the first identifier is located is always in the active state.

For any affiliated AP device, in a case that the affiliated AP device supports entering the dormant state, it means that the affiliated AP device may switch between the dormant state and the active state.

For any affiliated AP device, the affiliated AP device may be in the active state to perform data frame transmission with an associated STA device, for example, receiving an uplink data frame sent by the associated STA device, or sending a downlink data frame to the associated STA device, etc.

Alternatively, the first identifier bit may be at least one reserved bit in the first information field.

Alternatively, each first information field includes an STA control field, and the STA control field includes the first identifier bit. The first identifier bit may be one bit in reserved bits of the STA control field.

In some embodiments, each first information field also includes a second identifier bit, in which the second identifier bit indicates, by a third value, that the first information field includes a dormant period of the affiliated AP device associated with the corresponding communication link, that is, indicates that the affiliated AP device associated with the corresponding communication link has a dormant period; and the second identifier bit indicates, by a fourth value or a null value, that the first information field does not include the dormant period of the affiliated AP device associated with the corresponding communication link, that is, indicates that the affiliated AP device associated with the corresponding communication link does not have the dormant period.

The third value is different from the fourth value. For example, the third value may be 1 and the fourth value may be 0, which is not limited herein.

The second identifier bit may be at least one reserved bit in the first information field.

Alternatively, each first information field includes an STA control field, and the STA control field includes the second identifier bit. The second identifier bit may be one bit in reserved bits of the STA control field.

In some embodiments, in a case that the affiliated AP device associated with the communication link corresponding to each first information field has the dormant period, the first information field includes the dormant period of the affiliated AP device.

Each first information field includes an STA information (STA Info) field. In a case that an affiliated AP device associated with a communication link corresponding to the STA information field has the dormant period, the STA information field includes a dormant period of the affiliated AP device.

The STA information field may indirectly indicate the dormant period of the affiliated AP device by carrying the dormant period of the affiliated AP device by a sub-information element field or at least one reserved bit, or carrying related indication information by a sub-information field or at least one reserved bit.

In some embodiments, each first information field corresponds to a communication link, each first information field includes a link ID sub-field, and the link ID sub-field indicates a link ID of the communication link associated with the affiliated AP device.

Based on this, each first information field may correspond to one communication link, and each communication link is associated with one affiliated AP device of the first AP MLD, thus each first information field corresponds to or is associated with the one affiliated AP device of the first AP MLD.

Meanwhile, one affiliated AP device of the first AP MLD is associated with one affiliated STA device of the non-AP MLD by one communication link, thus each first information field corresponds to or is associated with one affiliated STA device of the non-AP MLD.

Alternatively, each first information field includes an STA control field, and the STA control field includes a link ID sub-field.

In some embodiments, each first information field includes a BSS parameter change count field, and, an identifier value of the BSS parameter change count field changes in a case that a dormant period of an affiliated AP device associated with a communication link corresponding to the BSS parameter change count field changes.

The identifier value of the BSS parameter change count field indicates a number of changes of a BSS parameter of the affiliated AP device.

The BSS parameter of each affiliated AP device includes the dormant period of the affiliated AP device.

Alternatively, each first information field includes a BSS parameter change count present field. In a case that an identifier value of the BSS parameter change count present field is an eighth value, it indicates that the first information field includes the BSS parameter change count field. In a case that the identifier value of the BSS parameter change count present field is a ninth value, it indicates that the first information field does not include the BSS parameter change count field.

The eighth value is different from the ninth value. For example, the eighth value may be 1, and the ninth value may be 0, which is not limited herein.

Alternatively, the first information field includes a BSS parameter change count field, and the BSS parameter change count field indicates that a BSS parameter of the affiliated AP device changes. Then the first information field includes a second identifier bit, and the identifier value of the second identifier bit is the third value, indicating that the affiliated AP device has a dormant period, and also indicating that the first information field includes the dormant period of the affiliated AP device.

Alternatively, the first information field includes an STA control field, and the STA control field includes a BSS parameter change count present field.

Alternatively, the first information field includes an STA information field, and the STA information field includes a BSS parameter change count field.

In some embodiments, each first information field includes an NSTR indication bitmap field, and the NSTR indication bitmap field indicates an NSTR state of the affiliated AP device.

Indicated content of the NSTR indication bitmap field changes in a case that a dormant period of an affiliated AP associated with a communication link corresponding to the NSTR indication bitmap field changes.

At step S62, a downlink data frame sent by a first AP device in an active state is received.

In some embodiments, the first STA device may receive a buffered downlink data frame sent by the first AP device in the active state.

In some embodiments, a last uplink data frame received by the first STA device when the first AP is in the active state includes a first indication field, and the first indication field indicates, by a fifth value, that the first AP device enters the dormant state upon arrival of the dormant period, and may also indicate that the first AP device switches to the dormant state after sending the downlink data frame and upon the arrival of the dormant period.

In some embodiments, the first indication field is a power saving field in an MAC frame header.

The fifth value may be 1, or another value, which is not limited herein.

At step S63, a first acknowledgment frame is sent.

In some embodiments, after all downlink data frames sent by the first AP device in the active state is received, the first STA device may send the first acknowledgment frame to the first AP device. The first acknowledgment frame indicates acknowledgment of receiving the downlink data frame sent by the first AP device, such that after the first acknowledgment frame is received, the first AP device enters the dormant state upon the arrival of the dormant period.

In some embodiments, steps S62 to S63 are alternative. In different embodiments, one or more of these steps may be omitted or substituted.

Referring to FIG. 7, FIG. 7 is a second flow chart illustrating a communication method performed by a first STA device according to an embodiment of the disclosure. The communication method illustrated in FIG. 7 may be performed by a first STA device, including the following.

At step S71, a first message frame is received.

In some embodiments, alternative implementations of step S71 may be referred to the alternative implementations of steps S61 in FIG. 6, which is not repeated here.

At step S72, an uplink data frame is sent when the first AP device is in an active state.

In some embodiments, when the first AP device is in the active state, the first STA device may send the uplink data frame to the first AP device.

In some embodiments, a last data frame sent by the first STA device to the first AP device when the first AP device is in the active state includes a second indication field. The second indication field indicates, by a sixth value, that the first STA device sends no more uplink data frame.

The sixth value may be 0, or another value, which is not limited herein.

In some embodiments, the second indication field is a more data field in an MAC header.

At step S73, a second acknowledgment frame and a second message frame are received.

In some embodiments, after the first AP device completes sending all the uplink data frame when the first AP device is in the active state, the first STA device may receive the second acknowledgment frame sent by the first AP device. The second acknowledgment frame indicates that the first AP device acknowledges receiving of the uplink data frame sent by the first STA device.

In some embodiments, after the second acknowledgment frame sent by the first AP device is received, the first STA device may also receive the second message frame sent by the first AP device. The second message frame includes a third indication field, and the third indication field indicates, by a seventh value, that the first AP device enters a dormant state upon arrival of the dormant period.

In some embodiments, the third indication field is a power saving field in an MAC header.

The seventh value may be 1, or another value, which is not limited herein.

In some embodiments, the second message frame may be a QoS null frame.

At step S74, a third acknowledgment frame is sent.

In some embodiments, after the first STA device receives the second message frame sent by the first AP device, the first STA device may send the third acknowledgment frame to the first AP device. The third acknowledgment frame indicates that the first STA device acknowledges receiving the second message frame, such that after the third acknowledgment frame is received, the first AP device enters the dormant state upon the arrival of the dormant period.

In some embodiments, steps S72 to S74 are alternative. In different embodiments, one or more of these steps may be omitted or substituted.

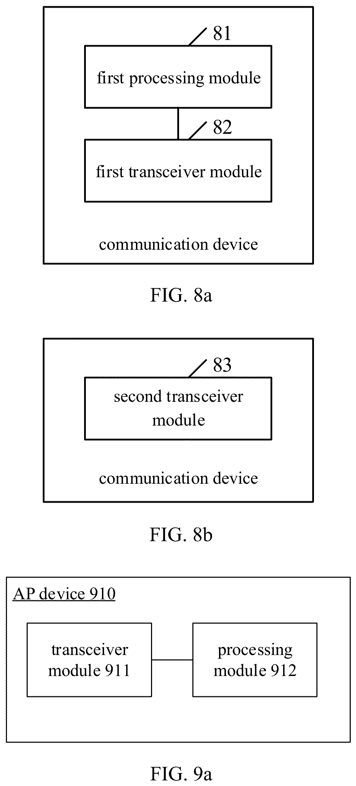

Embodiments of the disclosure also provide an apparatus for implementing any one of the above methods, such as the apparatus illustrated in FIG. 8a. The apparatus includes a first processing module 81 and a first transceiver module 82 for implementing steps performed by the first AP device in any one of the above methods. The embodiments of the disclosure also provide another apparatus, as illustrated in FIG. 8b, including a second transceiver module 83 for implementing steps performed by the first STA device in any one of the above methods.

It needs to be understood that the division of units or modules in the above apparatuses is merely a division of logical functions. In an actual implementation, the units may be fully or partially integrated into a single physical entity or may be physically separated. In addition, the units or modules in the apparatus may be implemented in a form of a processor calling software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be implemented in a form of a hardware circuit. Some or all of the functions of the units or modules may be realized by a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in a form of the processor invoking software, or fully implemented in a form of the hardware circuit, or partially implemented in a form of the processor calling software and the remaining part implemented in a form of the hardware circuit.

FIG. 9a is a block diagram of an AP device according to the embodiments of the disclosure. As illustrated in FIG. 9a, an AP device 910 may include at least one of: a transceiver module 911 or a processing module 912. In some embodiments, the transceiver module 911 is configured to send a first message frame, and the processing module 912 is configured to determine the first message frame.

Alternatively, the transceiver module 911 is configured to perform at least one of communication steps such as sending and/or receiving (such as, steps S23, S32, S34, S41 to S43, or S51 to S54, but not limited thereto) performed by the AP device 910 in any one of the above methods. The processing module 912 is configured to perform processing procedures (e.g., determining the first message frame, etc., but not limited thereto) performed by the AP device 910 in any one of the above methods, which is not repeated here.

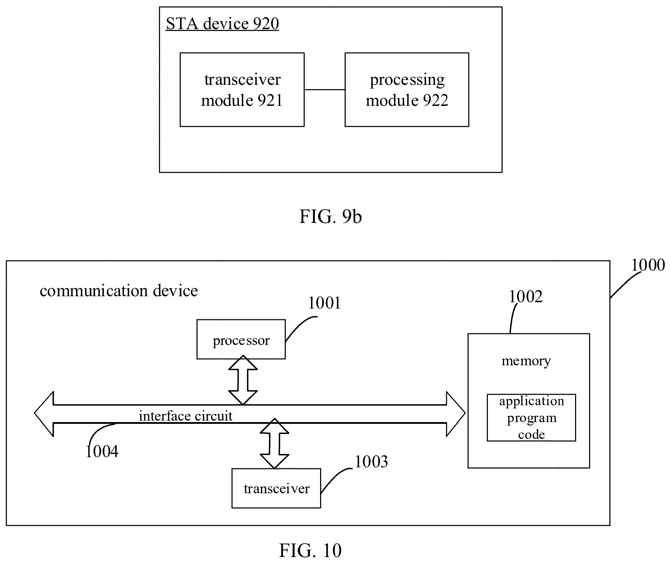

FIG. 9b is a block diagram of an STA device according to the embodiments of the disclosure. As illustrated in FIG. 9b, an STA device 920 may include at least one of: a transceiver module 921 or a processing module 922. In some embodiments, the transceiver module 921 is configured to receive a first message frame.

Alternatively, the transceiver module 921 is configured to perform at least one of communication steps such as sending and/or receiving (such as, steps S21 to S22, S31, S33, S61 to S63, or S71 to S74) performed by the STA device 920 in any one of the above methods. The processing module 922 is configured to perform processing procedures performed by the STA device 920 in any one of the above methods, which is not repeated here.

In some embodiments, a transceiver module may include a sending module and/or a receiving module. The sending module and the receiving module may be separate or integrated together. Alternatively, the transceiver module may be interchangeable with a transceiver.

In some embodiments, a processing module may be one module or may include multiple sub-modules. Alternatively, multiple sub-modules respectively perform all or some of steps required by the processing module. Alternatively, the processing module may be interchangeable with a processor.

FIG. 10 is a block diagram illustrating a communication device according to an embodiment of the disclosure. A communication device 1000 may be an AP device, or an STA device, or a chip, a chip system, or a processor that supports a network device in implementing any one of the above methods, or a chip, a chip system, or a processor that supports a terminal in implementing any one of the above methods. The communication device may be used to implement the method described in the above method embodiments. For details, reference may be made to the description in the above method embodiments.

As illustrated in FIG. 10, the communication device 1000 may include one or more processors 1001. The processor 1001 may be a general-purpose processor or a special-purpose processor. For example, the processor may be a baseband processor or a central processing unit. The baseband processor is configured to process communication protocols and communication data, and the central processor is configured to control the communication device (such as a base station, a baseband chip, a terminal, a terminal chip, DU or CU, etc.) to execute a computer program and process computer program data. The communication device 1000 is configured to perform any one of the above methods.

In some embodiments, the communication device 1000 also includes one or more memories 1002 for storing instructions. Alternatively, all or some of the memories 1002 may also be located outside the communication device 1000.

In some embodiments, the communication device 1000 further includes one or more transceivers 1003. When the communication device 1000 includes one or more transceivers 1003, the transceiver 1003 performs at least one of communication steps such as sending and/or receiving (such as, steps S21 to S23, S31 to S34, S41 to S44, S51 to S54, S61 to S63, or S71 to S74, but not limited thereto) in the above methods. The processor 1001 performs at least one of other steps (e.g., determining the first message frame, etc., but not limited thereto).

In some embodiments, the transceiver may include a receiver and/or a transmitter, which may be separate or integrated. Alternatively, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 1000 may include one or more interface circuits 1004. Alternatively, the interface circuit 1004 is connected to the memory 1002. The interface circuit 1004 may be used to receive signals from the memory 1002 or other devices, and may be used to send signals to the memory 1002 or other devices. For example, the interface circuit 1004 may read instructions stored in the memory 1002 and send the instructions to the processor 1001.

The communication device 1000 in the description of the above embodiments may be an AP device or an STA device, but the scope of the communication device 1000 described in the disclosure is not limited to this, and the structure of the communication device may not be limited by FIG. 10. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

The disclosure also provides a storage medium for storing instructions. When the instructions are run on the communication device 1000, the communication device 1000 is caused to perform any one of the above methods. Alternatively, the storage medium is an electronic storage medium. Alternatively, the storage medium is a computer-readable storage medium, but is not limited thereto, and may also be a storage medium readable by other devices. Alternatively, the storage medium may be a non-transitory storage medium, but is not limited thereto, and may also be a transitory storage medium.

The disclosure also provides a program product. When the program product is executed by the communication device 1000, the communication device 1000 is caused to perform any one of the above methods. Alternatively, the program product is a computer program product.

The disclosure also provides a computer program. When the computer program is executed on a computer, the computer is caused to implement any one of the above methods. The above description is merely preferred embodiments of the disclosure and an explanation of a technical principle applied. Those skilled in the art should understand that a scope of the disclosure is not limited to a technical solution formed by a specific combination of above technical features, but also includes other technical solutions formed by any combination of the above technical features or their equivalent features without departing from the principle of the disclosure. For example, a technical solution formed by replacing above features with technical features, including (but are not limited to) those having similar functions, disclosed in the disclosure.

## Claims

1. A communication method, comprising:
determining a first message frame, wherein the first message frame indicates a dormant period of at least one affiliated access point (AP) of a first AP multi-link device (MLD) supporting multiple links; and
sending the first message frame.

2. The method of claim 1, wherein the first message frame comprises at least one first information field, each of the at least one first information field corresponds to a communication link, and each per-station (STA) profile field comprises a first identifier bit,
wherein the first identifier bit indicates, by a first value, that an affiliated AP device associated with the communication link supports entering a dormant state; and
wherein the first identifier bit indicates, by a second value, that the affiliated AP device associated with the communication link is always in an active state.

3. The method of claim 2, wherein each of the at least one first information field comprises a second identifier bit,
wherein the second identifier bit indicates, by a third value, that the affiliated AP device associated with the communication link has a dormant period; and
wherein the second identifier bit indicates, by a fourth value, that the affiliated AP device associated with the communication link does not have the dormant period.

4. The method of claim 3, wherein each of the at least one first information field comprises an STA information field, and, in the case that an affiliated AP device associated with a communication link corresponding to the STA information field has a dormant period, the STA information field comprises the dormant period of the affiliated AP device.

5. The method of claim 2, wherein the first message frame comprises a basic multi-link element field, the basic multi-link element field comprises each of the at least one first information field, and the first information field is the per-STA profile field.

6. The method of claim 4, wherein each of the at least one first information field comprises a basic service set (BSS) parameter change count field, and an identifier value of the BSS parameter change count field changes in a case that a dormant period of an affiliated AP device associated with a communication link corresponding to the BSS parameter change count field changes; and
wherein the identifier value of the BSS parameter change count field indicates a number of changes of a BSS parameter of the affiliated AP device, and the BSS parameter comprises the dormant period.

7. The method of claim 4, wherein each of the at least one first information field comprises a non-simultaneous transmit-receive (NSTR) indication bitmap field, and indicated content of the NSTR indication bitmap field changes in a case that a dormant period of an affiliated AP associated with a communication link corresponding to the NSTR indication bitmap field changes.

8. The method of claim 1, wherein, in an active state, a last downlink data frame sent to a first STA device associated comprises a first indication field, and the first indication field indicates, by a fifth value, entering a dormant state upon arrival of the dormant period, and
after sending the last downlink data frame, the method further comprises:
receiving a first acknowledgment frame sent by the first STA device and entering the dormant state upon the arrival of the dormant period, wherein the first acknowledgment frame indicates acknowledgment of receiving the last downlink data frame.

9. The method of claim 8, wherein the first indication field is a power saving information field in a medium access control (MAC) frame header.

10. The method of claim 1, wherein a last uplink data frame received in an active state and sent by a first STA device comprises a second indication field, and the second indication field indicates, by a sixth value, that the first STA device sends no more uplink data frame, and
after receiving the last uplink data frame, the method further comprises:
sending a second acknowledgment frame and a second message frame, wherein the second message frame comprises a third indication field, the third indication field indicates, by a seventh value, entering a dormant state upon arrival of the dormant period, and the second acknowledgment frame indicates acknowledgment of receiving an uplink data frame; and
receiving a third acknowledgment frame sent by a first STA and entering the dormant state upon the arrival of the dormant period, wherein the third acknowledgment frame indicates acknowledgment of receiving the second message frame.

11. The method of claim 10, wherein the second indication field is a more data field in a medium access control (MAC) frame header, and the third indication field is a power saving information field in the MAC frame header; and the second message frame is a quality of service (QoS) null frame.

12. A communication method, comprising:
receiving a first message frame, wherein the first message frame indicates a dormant period of at least one affiliated access point (AP) of a first AP multi-link device (MLD).

13. The method of claim 12, wherein the first message frame comprises at least one first information field, each of the at least one first information field corresponds to a communication link, and each per-station (STA) profile configuration information field comprises a first identifier bit,
wherein the first identifier bit indicates, by a first value, that an affiliated AP device associated with the communication link supports entering a dormant state; and
wherein the first identifier bit indicates, by a second value, that the affiliated AP device associated with the communication link is always in an active state.

14. The method of claim 13, wherein each of the at least one first information field comprises a second identifier bit,
wherein the second identifier bit indicates, by a third value, that the affiliated AP device associated with the communication link has a dormant period; and
wherein the second identifier bit indicates, by a fourth value, that the affiliated AP device associated with the communication link does not have the dormant period.

15. The method of claim 14, wherein each of the at least one first information field comprises an STA information field, and, in a case that an affiliated AP device associated with a communication link corresponding to the STA information field has a dormant period, the STA information field comprises the dormant period of the affiliated AP device.

16. The method of claim 13, wherein the first message frame comprises a basic multi-link element field, the basic multi-link element field comprises each of the at least one first information field, and the first information field is the per-STA profile field.

17. The method of claim 15, wherein each of the at least one first information field comprises a basic service set (BSS) parameter change count field, and an identifier value of the BSS parameter change count field changes in a case that a dormant period of an affiliated AP device associated with a communication link corresponding to the BSS parameter change count field changes; and
the identifier value of the BSS parameter change count field indicates a number of changes of a BSS parameter of the affiliated AP device, and the BSS parameter comprises the dormant period.

18. The method of claim 15, wherein each of the at least one first information field comprises a non-simultaneous transmit-receive (NSTR) indication bitmap field, and indicated content of the NSTR indication bitmap field changes in a case that a dormant period of an affiliated AP associated with a communication link corresponding to the NSTR indication bitmap field changes.

19. The method of claim 12, wherein a last downlink data frame received when a first AP device is in an active state comprises a first indication field, and the first indication field indicates, by a fifth value, that the first AP device enters a dormant state upon arrival of the dormant period, and
after receiving the last downlink data frame, the method further comprises:
sending a first acknowledgment frame to the first AP device, wherein the first message frame indicates acknowledgment of receiving the last downlink data frame.

20. The method of claim 19, wherein the first indication field is a power saving information field in a medium access control (MAC) frame header.

21. The method of claim 12, wherein a last uplink data frame sent to a first AP device in an active state comprises a second indication field, and the second indication field indicates, by a sixth value, that no more uplink data frame is sent, and
after sending the last uplink data frame, the method further comprises:
receiving a second acknowledgment frame and a second message frame sent by the first AP device, wherein the second message frame comprises a third indication field, the third indication field indicates, by a seventh value, that the first AP device enters a dormant state upon arrival of the dormant period, and the second acknowledgment frame indicates acknowledgment of receiving an uplink data frame; and
sending a third acknowledgment frame to the first AP device, wherein the third acknowledgment frame indicates acknowledgment of receiving the second message frame.

22. The method of claim 21, wherein the second indication field is a more data field in a medium access control (MAC) frame header, and the third indication field is a power saving information field in the MAC frame header; and the second message frame is a quality of service (QoS) null frame.

23. A communication device, comprising:
a first processing module, configured to determine a first message frame, wherein the first message frame indicates a dormant period of at least one affiliated access point (AP) of a first AP multi-link device (MLD) supporting multiple links; and
a first transceiver module, configured to send the first message frame.

24. A communication device, comprising:
a second transceiver module, configured to receive a first message frame, wherein the first message frame indicates a dormant period of at least one affiliated access point (AP) of a first AP multi-link device (MLD).

25. An access point (AP) device, comprising:
one or more processors,
wherein the AP device is configured to perform the communication method of any one of claims 1 to 11.

26. A station (STA) device, comprising:
one or more processors,
wherein the STA device is configured to perform the communication method of any one of claims 12 to 22.

27. A communication system, comprising an access point (AP) device and a station (STA) device, wherein the AP device is configured to implement the communication method of any one of claims 1 to 11, and the STA device is configured to implement the communication method of any one of claims 11 to 22.

28. A storage medium for storing instructions, wherein when the instructions are run on a communication device, the communication device is caused to perform the communication method of any one of claims 1 to 11 or claims 12 to 22.
